# EUROPÄISCHE PATENTANMELDUNG

(11) **EP 2 431 736 A1**
(43) Veröffentlichungstag der Anmeldung: **21.03.2012**
(21) Anmeldenummer: 10177354.7
(22) Anmeldetag: 17.09.2010
(51) Int. Cl.: G01N 25/72, C23C 4/00, C23C 28/00, G01N 21/88

(54) **Verfahren zum Testen einer für das Durchführen eines Thermografieverfahrens ausgebildeten Thermografieanlage auf ihre ordnungsgemäße Funktion, Testbauteil hierfür sowie Verfahren dessen Herstellung**

(71) Anmelder: Siemens Aktiengesellschaft, 80333 München (DE)
(72) Erfinder: Ladru, Francis-Jurjen, 13587 Berlin (DE); Siebert, Bernhard, 14059 Berlin (DE)

(57) **Zusammenfassung**

Es wird ein mit einem Beschichtungssystem (11) beschichtetes Testbauteil (13) zur Verfügung gestellt. In wenigstens einem definierten Bereich (9) des Testbauteils (13) ist eine gezielt in das Beschichtungssystem (11) eingebrachte Delamination (19) mit definierten Eigenschaften vorhanden. Das Testbauteil (13) findet in einem Verfahren zum Testen einer für das Durchführen eines Thermografieverfahrens ausgebildeten Thermografieanlage auf ihre ordnungsgemäße Funktion im Hinblick auf die Dektektion von Delaminationen Verwendung. Zum Testen der Thermografieanlage wird an dem Testbauteil (13) die wenigstens eine definierte Delamination (19) des Beschichtungssystems (11) mittels des in der Thermographieanlage zur Anwendung kommenden Thermografieverfahrens detektiert.

## Beschreibung

Die vorliegende Erfindung betrifft ein Verfahren zum Testen einer für das Durchführen eines Thermografieverfahrens ausgebildeten Thermografieanlage auf ihre ordnungsgemäße Funktion. Daneben betrifft die Erfindung ein Testbauteil, welches in dem Testverfahren Verwendung findet, sowie ein Verfahren zum Herstellen eines solchen Testbauteils.

Bauteile, die bei ihrem Einsatz hohen thermischen Belastungen ausgesetzt sind, wie etwa Turbinenleit- oder Laufschaufeln (im Folgenden kurz als Turbinenschaufeln zusammengefasst) sind in der Regel aus hochtemperaturfesten Nickel- oder Kobalt-Basislegierungen hergestellt. Obwohl solche Legierungen eine hohe thermische Belastbarkeit aufweisen, müssen die Bauteile in der Regel noch mit einer korrosions- und/oder oxidationshemmenden Schicht versehen werden, um ihre Lebensdauer bei den im Betrieb herrschenden Bedingungen zu erhöhen. Zusätzlich kommt in der Regel noch eine Wärmedämmschicht zur Anwendung, die auf die oxidations- und/oder korrosionshemmende Schicht aufgebracht wird, um die Temperatur, welche diese Schicht erfährt, zu vermindern und so die Lebensdauer des Bauteils weiter zu erhöhen. Dabei ist eine gute Anbindung der jeweiligen Schicht an das darunter liegende Substrat von hoher Bedeutung, da eine lokale Ablösung der Schicht das Risiko von Abplatzungen erhöht, wodurch das darunter liegende Substratmaterial direkt den thermisch hoch belastenden Umgebungsbedingungen ausgesetzt wird, was einen vorzeitigen Austausch des entsprechenden Bauteils erforderlich macht. Beschichtete hoch belastete Bauteile wie Turbinenschaufeln werden daher zur Qualifizierung mittels Stichproben oder fertigungsbegleitend zu hundert Prozent zerstörungsfrei untersucht der Beschichtung mittels Thermografie untersucht, um eine einwandfreie Anbindung der Beschichtung sicher zu stellen.

Hierfür kommen Thermografieanlagen zur Anwendung, in denen die Delaminationen, also Schichtablösungen, mittels eines Thermografieverfahrens detektiert werden. Die Thermografieanlagen werden von Zeit zu Zeit auf ihre ordnungsgemäße Funktion sowie zur Einrichtung überprüft, um sicher zu stellen, dass mit den Thermografieverfahren Delaminationen zuverlässig detektiert werden können.

Es ist Aufgabe der vorliegenden Erfindung, ein Testverfahren zur Verfügung zu stellen, mit dem sich eine Thermografieanlage im Hinblick auf ihre Fähigkeit zur Detektion von Delaminationen hin zuverlässig testen lässt. Es ist eine weitere Aufgabe der vorliegenden Erfindung, ein Testbauteil zur Verfügung zu stellen, welches ein zuverlässiges Testen einer Thermografieanlage im Hinblick auf ihre Fähigkeit, Delaminationen zu erkennen, ermöglicht. Schließlich ist es eine Aufgabe der vorliegenden Erfindung, ein Verfahren zum Herstellen eines derartigen Testbauteils zur Verfügung zu stellen.

Diese Aufgaben werden durch ein Verfahren zum Herstellen eines Testbauteils nach Anspruch 1, durch ein Testbauteil nach Anspruch 9 bzw. ein Verfahren zum Testen einer Thermografieanlage nach Anspruch 15 gelöst. Die abhängigen Ansprüche enthalten vorteilhafte Ausgestaltungen der Erfindung.

In dem erfindungsgemäßen Verfahren zum Herstellen eines Testbauteils, das eine mit einem Beschichtungssystem beschichtete Oberfläche besitzt, wird auf der Oberfläche gezielt wenigstens ein Bereich hergestellt, der eine definierte Delamination des Beschichtungssystems, also eine definierte Schichtablösung, aufweist. Das Testbauteil kann insbesondere als Turbinenschaufel, d.h. als Leitschaufel oder Laufschaufel einer Turbine ausgestaltet sein.

Mit einem Testbauteil, welches eine oder mehrere bekannte Stellen mit einer definierten Schichtablösung aufweist, lässt sich eine zum Detektieren solcher Delaminationen mittels Thermografieverfahren ausgebildeten Thermografieanlage sicher dahingehend testen, ob die definierten Delaminationen mittels des Thermografieverfahrens hinreichend genau detektiert werden. Durch das gezielte Herstellen von Delaminationen lassen sich deren Größe sowie der Grad der Resthaftung der Beschichtung an dem darunter liegenden Substratmaterial definiert einstellen. Weitere Parameter, die sich mit dem erfindungsgemäßen Verfahren zum Herstellen eines Testbauteils definiert einstellen lassen, sind die Lage der Delamination auf dem Bauteil und deren geometrische Form. Insbesondere lassen sich mit dem Verfahren auch Bauteile herstellen, die mehrere definierte Delaminationen aufweisen, welche sich zumindest in einem der Merkmale Lage, Größe, Form oder Resthaftung an das darunter liegende Substratmaterial unterscheiden. Auf diese Weise kann das so hergestellte Testbauteil dazu Verwendung finden, die Thermografieanlage über einen ganzen Bereich von Delaminationen mit unterschiedlichen Eigenschaften zu testen.

Das Herstellen der definierten Delamination kann insbesondere die Schritte umfassen:
- Abdecken eines unbeschichteten Bauteils, wobei wenigstens ein definierter Bereich der Oberfläche des Bauteils unbedeckt bleibt;
- Aufbringen einer Hilfsschicht auf den wenigstens einen unbedeckten Bereich der Oberfläche, wobei die Hilfsschicht so gewählt ist, dass das Beschichtungssystem darauf eine im Vergleich zur Oberfläche des Bauteils geringere Haftung besitzt;
- Entfernen der Abdeckung;
- Beschichten des Bauteils mit dem Beschichtungssystem.

Hierbei kann als Hilfsschicht ein festes oder ein flüssiges Material Verwendung finden.
Bei Verwendung von Maskierungen mit Öffnungen definierter Form und Größe zum Abdecken des Turbinenbauteils lassen sich so Hilfsschichten mit definierter Größe und Form herstellen. Außerdem lassen sich beim Herstellen der Hilfsschichten auch unterschiedliche Schichtdicken erzeugen, welche den Grad der Resthaftung des delaminierten Beschichtungssystems auf der Hilfsschicht beeinflussen.

Sowohl thermische Spritzverfahren wie etwa Hochgeschwindigkeitsflammspritzen (HVOF, high velocity oxygen fuel), Kaltgasspritzen oder Plasmaspritzen, insbesondere atmosphärisches Plasmaspritzen (APS), und physikalische Abscheidungsverfahren aus der Gasphase, wie etwa Electron Beam Physical Vapour Deposition (EB-PVD), lassen sich zum Herstellen von Hilfsschichten grundsätzlich verwenden. Insbesondere mit atmosphärischen Plasmaspritzen als thermischem Spritzverfahren lassen sich die Hilfsschichten kostengünstig und hinreichend präzise herstellen. Durch geeignete Wahl der Verfahrensparameter in den gewählten Verfahren zum Aufbringen der Hilfsschicht ist ein Einstellen der Oberflächenrauheit der Hilfsschicht möglich, so dass mit demselben Verfahren unterschiedliche Rauheiten erzeugt werden können, wodurch sich die Resthaftung des Beschichtungssystems beeinflussen lässt.

Als Hilfsschicht kann insbesondere eine Keramikschicht zur Anwendung kommen, beispielsweise eine Schicht aus Zirkoniumoxid, welches mit Yttriumoxid in seine Gitterstruktur zumindest teilstabilisiert ist (YSZ, yttria stabilized zirconia). Aber auch andere Materialien können für das Bilden der Hilfsschicht zur Anwendung kommen, so lange das Beschichtungssystem auf dem Material der Hilfsschicht schlechter haftet als auf dem Substratmaterial des Bauteils oder die Hilfsschicht eine abweichende Wärmeleitfähigkeit besitzt. Durch die Materialwahl für die Hilfsschicht lässt sich dabei die Resthaftung des Beschichtungssystems beeinflussen.

Die Hilfsschicht sollte wenigstens eine Dicke von 10µm aufweisen, um eine Delamination hinreichend sicher herbeizuführen. In der Regel sind Schichtdicken im Bereich zwischen 10 und 100µm geeignet, insbesondere im Bereich zwischen 10 und 50µm, vorzugsweise zwischen 30 und 40µm. Aber auch Schichtdicken größer 100µm sind grundsätzlich möglich.

Das Beschichtungssystem, mit dem das Testbauteil beschichtet wird, umfasst vorzugsweise wenigstens eine Haftvermittlerschicht, welche außerdem eine oxidations- und/oder korrosionshemmende Wirkung aufweist, etwa eine sogenannte MCrAlY-Schicht, wobei M für Eisen (Fe), Kobalt (Co) oder Nickel (Ni) und Y für ein Element der seltenen Erden, insbesondere für Yttrium und/oder Hafnium stehen. Alternativ oder zusätzlich umfasst das Beschichtungssystem eine thermische Wärmedämmschicht (thermal barrier coating, TBC), die insbesondere als mit Yttriumoxid in seiner Struktur wenigstens teilweise stabilisierte Zirkoniumoxidschicht (YSZ) ausgebildet sein kann.

Mit dem erfindungsgemäßen Verfahren zum Herstellen eines Testbauteils können vorteilhafte Testbauteile hergestellt werden. Insbesondere können beliebig viele Fehler an beliebiger Stelle in das Testbauteil eingebracht werden, deren Größe, Form und Intensität der Delamination zudem gezielt eingestellt werden können. Das Herstellen der gezielten Delaminationen lässt sich zudem an jedem Bauteiltyp und mit jeder Beschichtung realisieren. Schließlich müssen weniger Bauteile für Untersuchungen/Tests vorgehalten werden als im Stand der Technik, in dem zum Testen einer Thermografieanlage typischerweise mit Schaufeln gearbeitet wird, die durch die vorhergehenden Prozesse ein Anhaftungsdefizit erlitten haben, ohne dass das Anhaftungsdefizit gezielt eingebracht worden ist. Dabei ist meist nur eine Delamination an einer einzigen Stelle mit zuvor unbekannter Größe und Intensität der Delamination vorhanden, was die Sicherheit beim Testen verringert bzw. zuerst ein Bestimmen der Delamination mit einer bekanntermaßen funktionierenden Thermografieanlage erforderlich macht. Zudem werden die im Stand der Technik verwendeten Schaufeln dem Produktionsprozess in einem relativ späten Stadium entzogen, wodurch unnötige Kosten entstehen. Im Gegensatz dazu kann im Rahmen des erfindungsgemäßen Verfahrens zum Herstellen eines Testbauteils ein Bauteil verwendet werden, das frühzeitig aus der Produktionskette fällt und somit frühzeitig als Ausschussbauteil klassifiziert würde. Als solches stellt es keinen nennenswerten Wert mehr dar und würde, wenn nicht als Testbauteil verwendet, der Verschrottung zugeführt werden. Insgesamt lassen sich beim Herstellen eines Testbauteils gemäß dem erfindungsgemäßen Verfahren also die Produktionskosten sowie die spätere Testunsicherheit beim Testen der Thermografieanlage verringern.

Erfindungsgemäß wird außerdem ein mit einem Beschichtungssystem beschichtetes Testbauteil zur Verfügung gestellt. In wenigstens einem definierten Bereich besitzt das Testbauteil eine gezielt angebrachte Delamination mit definierten Eigenschaften in dem Beschichtungssystem. Als definierte Eigenschaften sollen hierbei insbesondere die Lage, die Größe und die Form der Delamination sowie der Grad der Ablösung verstanden werden.

Mit dem erfindungsgemäßen Bauteil, das insbesondere als Turbinenschaufel ausgebildet sein kann, lässt sich eine Thermografieanlage, in der Delaminationen mit einem Thermografieverfahren detektiert werden sollen, präzise auf ihre einwandfreie Funktion testen, da aufgrund der definierten Eigenschaften der Delaminationen im Testbauteil für unterschiedliche Delaminationsgrade, Lagen, Größen und Formen Thermografiesignale aufgenommen und ausgewertet werden können. Im Stand der Technik waren hierzu in der Regel mehrere Turbinenschaufeln notwendig, deren Delaminationen zudem vor dem Testen nicht hinreichend spezifiziert waren, so dass im Vergleich zum erfindungsgemäßen Testbauteil lediglich ungenauere Ergebnisse möglich waren.

In dem wenigstens einen Bereich des Testbauteils mit der gezielt eingebrachten Delamination kann eine Hilfsschicht zwischen der Oberfläche des Bauteils und dem Beschichtungssystem vorhanden sein, welche für das Beschichtungssystem eine geringere Haftung oder eine andere Wärmeleitfähigkeit bietet als die Oberfläche des Bauteils selbst. Als solch eine Hilfsschicht kann beispielsweise eine Keramikschicht, etwa eine Schicht aus Zirkonoxid, welches mit Yttriumoxid zumindest teilstabilisiert ist (YSZ) vorhanden sein. Die Dicke der Hilfsschicht ist vorzugsweise wenigstens 10µm und kann im Bereich zwischen 10µm und 100µm, vorzugsweise im Bereich zwischen 10 und 50pm, insbesondere im Bereich zwischen 30 und 40µm liegen, aber auch höhere Schichtdicken sind grundsätzlich möglich.

Die Verwendung einer Hilfsschicht erlaubt in besonderem Maße das gezielte Herstellen der Delamination. Größe und Form der Delamination können dann durch die Größe und Form der Hilfsschicht, der Grad der Delamination durch die Dicke, die Rauhigkeit und das Material der Hilfsschicht beeinflusst werden.

Das Testbauteil kann insbesondere ein Beschichtungssystem aufweisen, welches wenigstens eine Haftvermittlerschicht umfasst, die zudem oxidations- und/oder korrosionshemmende Eigenschaften besitzt wie etwa eine McAlY-Schicht, und/oder wenigstens eine thermische Wärmedämmschicht umfassen, etwa eine mit Yttriumoxid in seiner Struktur wenigstens teilweise stabilisierte Zirkoniumoxidschicht (YSZ). Derartige Beschichtungssysteme kommen insbesondere bei Turbinenschaufeln zum Einsatz, so dass sich ein Testbauteil mit einer solchen Beschichtung insbesondere zum Testen von Thermografieanlagen eignet, die zum Detektieren von Delaminationen in Turbinenbauteilen zum Einsatz kommen. Grundsätzlich kann das Testbauteil aber auch andere Beschichtungssysteme aufweisen, die speziell im Hinblick auf die Beschichtungssysteme gewählt sind, an denen in der Thermografieanlage Delaminationen detektiert werden sollen.

Erfindungsgemäß wird außerdem ein Verfahren zum Testen einer für das Durchführen eines Thermografieverfahrens ausgebildeten Thermografieanlage auf ihre ordnungsgemäße Funktion im Hinblick auf die Detektion von Delaminationen zur Verfügung gestellt. In dem Verfahren wird zum Testen der Thermografieanlage auf ihre ordnungsgemäße Funktion ein erfindungsgemäßes Testbauteil verwendet, welches insbesondere als Turbinenschaufel ausgebildet sein kann. Mit dem Testbauteil wird die wenigstens eine definierte Delamination des Beschichtungssystems mittels des in der Thermografieanlage zur Anwendung kommenden Thermografieverfahrens detektiert. Wie bereits mit Bezug auf das Testbauteil selbst bzw. das Verfahren zum Herstellen eines solchen Testbauteils erläutert worden ist, bietet die Verwendung des Testbauteils den Vorteil, dass mittels eines einzigen Testbauteils ein großer Bereich an unterschiedlichen Delaminationen getestet werden kann und dass die Genauigkeit des Testverfahrens gegenüber dem Stand der Technik erhöht ist, da die Eigenschaften der Delamination bereits vor dem Test hinreichend genau bekannt sind.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt beispielhaft eine Gasturbine in einem Längsteilschnitt.
- Figur 2: zeigt eine Turbinenschaufel in einer perspektivischen Ansicht.
- Figur 3: zeigt ein Beispiel für eine Gasturbinenbrennkammer in einer perspektivischen Darstellung.
- Figur 4: zeigt ein als Turbinenschaufel ausgebildetes erfindungsgemäßes Testbauteil.
- Figur 5: zeigt das Testbauteil aus Figur 4 in einer schematischen Schnittdarstellung.
- Figur 6: zeigt das Testbauteil aus Figur 5 in einem ersten Stadium des Herstellungsverfahrens.
- Figur 7: zeigt das Testbauteil aus Figur 5 in einem zweiten Stadium des Herstellungsverfahrens.
- Figur 8: zeigt das Testbauteil aus Figur 5 in einem dritten Stadium des Herstellungsverfahrens.
- Figur 9: zeigt das Testbauteil aus Figur 5 in einem vierten Stadium des Herstellungsverfahrens.

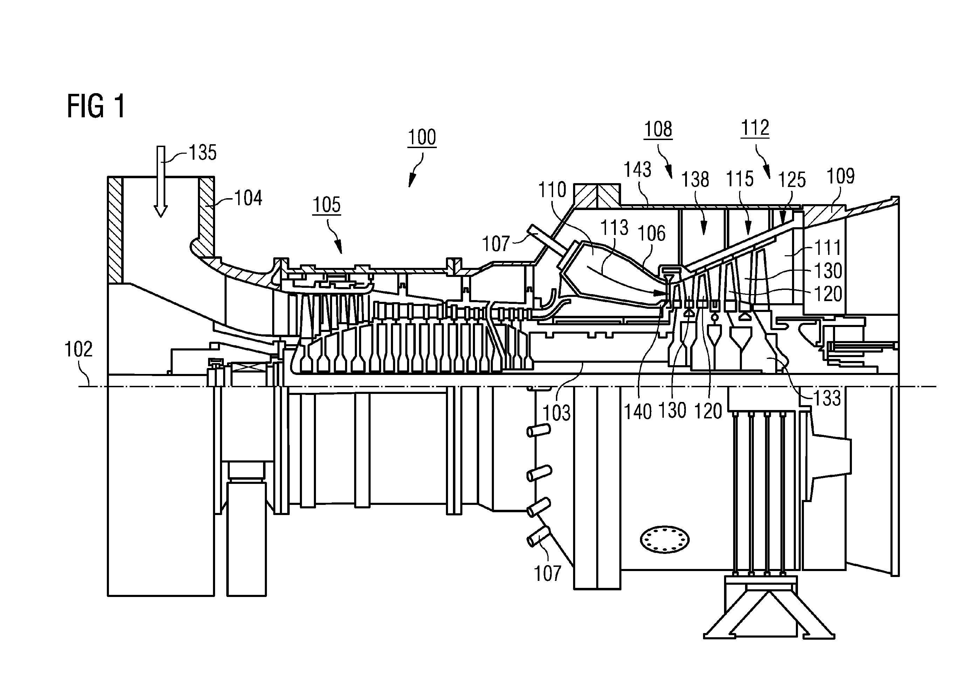

Die Figur 1 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.
Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 Al, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus Zr0₂, Y₂0₃-Zr0₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

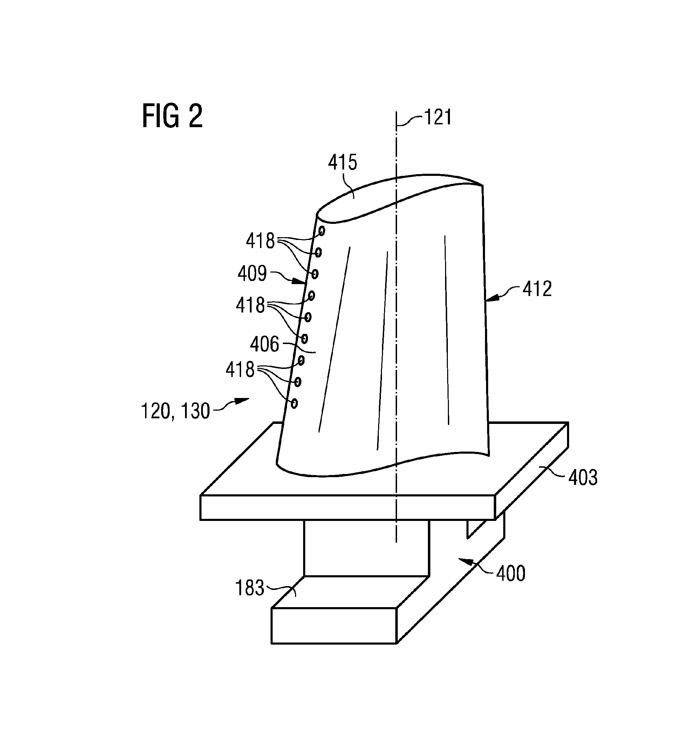

Die Figur 2 zeigt in perspektivischer Ansicht eine Laufschaufel 120 oder Leitschaufel 130 einer Strömungsmaschine, die sich entlang einer Längsachse 121 erstreckt.
Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt) .
Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAIX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAIX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

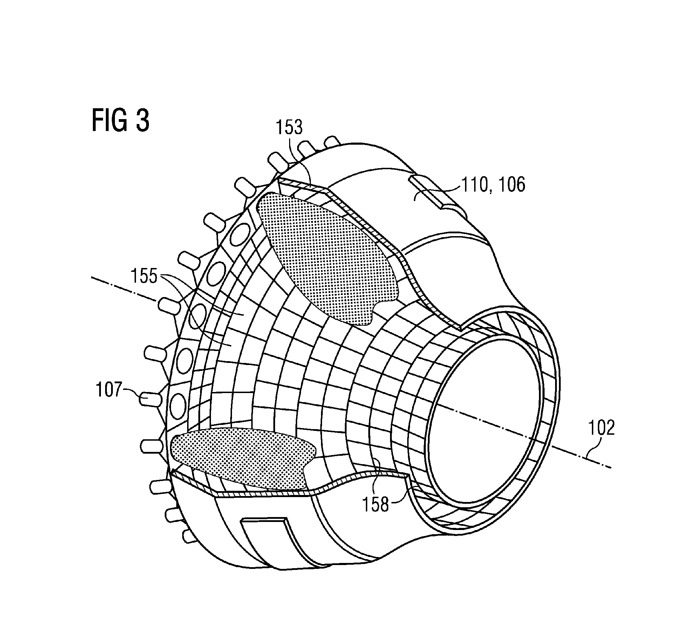

Die Figur 3 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrA1X-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

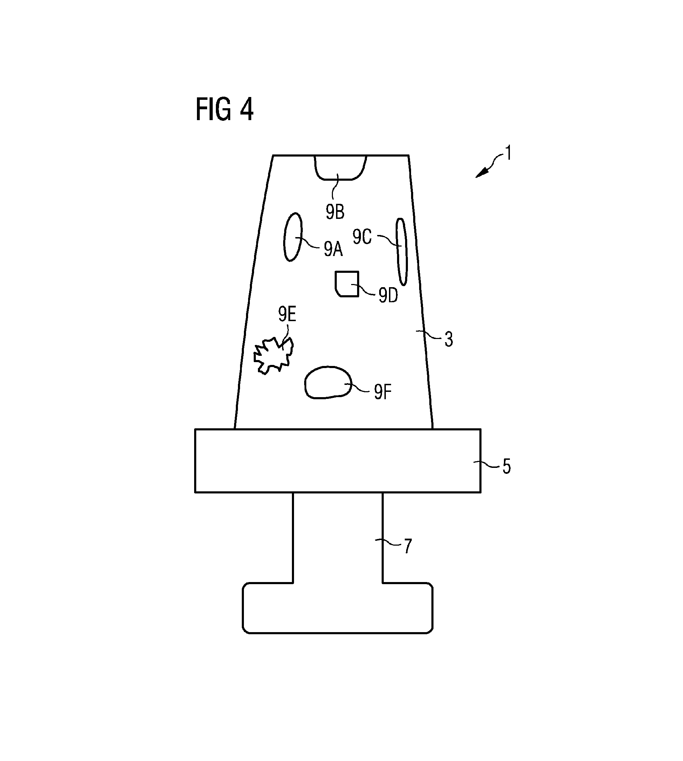

Figur 4 zeigt als ein Ausführungsbeispiel für ein erfindungsgemäßes Testbauteil eine beschichtete Turbinenschaufel 1. Als Beschichtung ist ein Beschichtungssystem vorhanden, das eine korrosions- und/oder oxidationshemmende Haftvermittlerschicht, und eine auf die Haftvermittlerschicht aufgebrachte keramische Wärmedämmschicht umfasst. Das Beschichtungssystem ist insbesondere auf das Schaufelblatt 3 aufgebracht, kann aber auch auf zumindest einem Teil der Schaufelplattform 5 aufgebracht sein. Der Schaufelfuß 7 ist in der Regel nicht mit einem derartigen Beschichtungssystem versehen.

Das auf das Schaufelblatt 3 aufgebrachte Beschichtungssystem weist eine Anzahl definierter Bereiche 9A bis 9F auf, in welchen gezielt in das Beschichtungssystem eingebrachte Delaminationen vorhanden sind. Die in den Bereichen 9A bis 9F vorhandenen Delaminationen sind insbesondere hinsichtlich ihrer Lage, ihrer Größe, ihrer Form und ihrer Signalintensitäten, die sie in einem Thermografieverfahren erzeugen, wohl definiert.

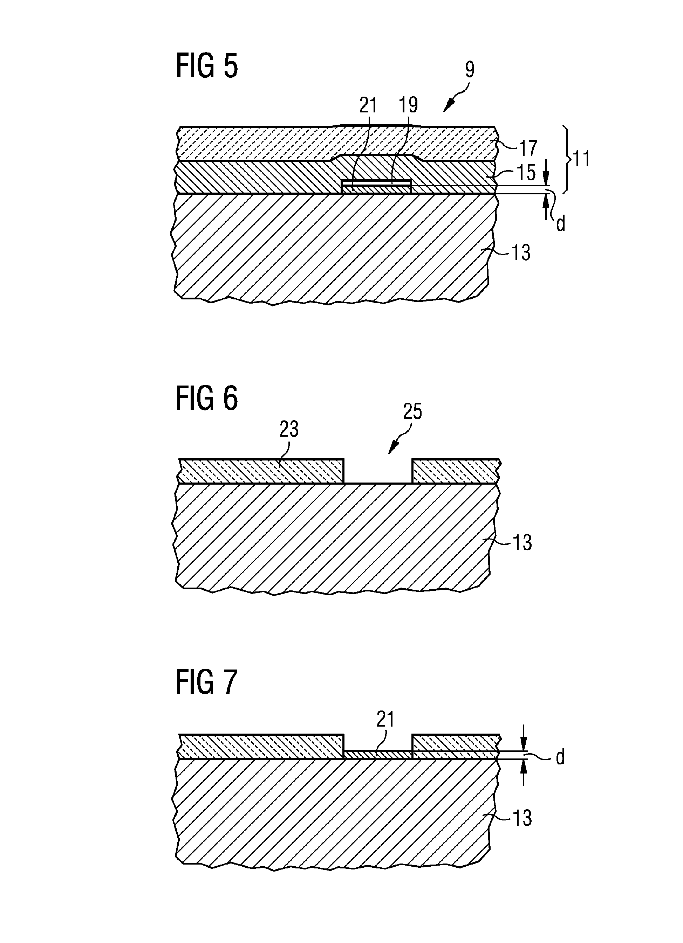

Einen schematischen Querschnitt durch das mit dem Beschichtungssystem versehene Schaufelblatt 3 ist in Figur 5 dargestellt. In dem Querschnitt sind das Substrat 13 sowie das darauf aufgebrachte Beschichtungssystem 11 mit der Haftvermittlerschicht 15 und der thermischen Wärmedämmschicht 17 zu erkennen. Darüber hinaus ist ein Bereich 9 mit einer gezielt eingebrachten Delamination 19 zu erkennen. Im Bereich der Delamination 19 ist eine Hilfsschicht 21 vorhanden, die für das Beschichtungssystem 11, insbesondere die Haftvermittlerschicht 15, eine geringere Haftung oder eine andere Wärmeleitfähigkeit bietet als die Substratoberfläche, also die eigentliche Oberfläche des Bauteils.

Im vorliegenden Ausführungsbeispiel ist die Hilfsschicht als Keramikschicht ausgebildet. Sie besitzt eine Dicke d von wenigstens 10µm und hat vorzugsweise eine Dicke im Bereich zwischen 10µm und 100µm, insbesondere im Bereich zwischen 30 und 40µm. Die Bedingungen für das Anhaften des Beschichtungssystems an der Hilfsschicht können durch mehrere Faktoren beeinflusst werden. Insbesondere durch die Rauheit der Oberfläche der Hilfsschicht 21, wobei eine geringere Rauheit die Haftung verringert und somit die Delamination verstärkt. Aber auch die Dicke der Hilfsschicht 21 spielt eine Rolle, wobei dickere Hilfsschichten zu geringerer Haftung und damit zu ausgeprägteren Delaminationen führen. Weiterhin hängt die Haftung auch von dem für die Hilfsschicht 21 verwendeten Material ab.

Neben einer definierten Dicke und einer definierten Oberflächenrauheit weist die Hilfsschicht 21 zudem eine definierte Form und eine definierte Größe auf. Dadurch lassen sich Größe und Form der gezielt eingebrachten Delamination festlegen.

In einem konkreten Beispiel für das Beschichtungssystem 11 und die Hilfsschicht 21 ist die Haftvermittlerschicht 15 als MCrAlY-Schicht und die Wärmedämmschicht 17 als mit Yttrium wenigstens teilsstabilisierte Zirkoniumoxidschicht ausgebildet. Als Hilfsschicht 21 kommt ebenfalls eine mit Yttrium wenigstens teilstabilisierte Zirkoniumoxidschicht zur Anwendung. Auf deren Oberfläche haftet die MCrAlY-Schicht weniger als auf der Oberfläche der Nickel-, Kobalt- oder Eisenbasislegierung aus der im vorliegenden Ausführungsbeispiel das Substrat besteht, so dass sich beim Aufbringen des Beschichtungssystems 11 an der Stelle der Hilfsschicht 21 die Delamination 19 ausbildet.

Die Herstellung eines Testbauteils mit Bereichen, in denen gezielt eingebrachte Delaminationen 19 vorhanden sind, wird nachfolgend mit Bezug auf die Figuren 6 bis 9 beschrieben. Mit dem Verfahren wird auf der Oberfläche eines Testbauteils, das in Figur 6 durch das Substrat 13 repräsentiert ist, wenigstens ein Bereich hergestellt, der eine definierte Delamination eines Beschichtungssystems aufweist. Hierzu wird in einem ersten Schritt das unbeschichtete Substrat 13 beispielsweise mittels einer Maske 23 abgedeckt, so dass ein definierter Bereich 25 der Substratoberfläche unbedeckt bleibt. Dieser unbedeckte Bereich 25 entspricht nach Abschluss des Verfahrens einem Bereich 9 mit einer gezielt eingebrachten Delamination.

Nach dem Abdecken des Substrats 13 erfolgt ein Beschichten des unbedeckten Bereichs 25 mit der Hilfsschicht 21, beispielsweise einer mit Yttrium wenigstens teilweise stabilisierten Zirkoniumoxidschicht. Das Aufbringen der Hilfsschicht 21 kann hierbei insbesondere mittels eines thermischen Spritzverfahrens, etwa mittels atmosphärischen Plasmaspritzens, erfolgen. Durch Variieren der Spritzparameter kann hierbei die Oberflächenrauheit der Hilfsschicht 21 beeinflusst werden. Das Aufbringen der Hilfsschicht 21 erfolgt solange bis die gewünschte Schichtdicke d, die mindestens 10µm beträgt und im vorliegenden Ausführungsbeispiel im Bereich von 30 bis 40µm liegt, erreicht ist. Das Testbauteil nach dem Aufbringen der Hilfsschicht 21 in dem unbedeckten Bereich 25 ist in Figur 7 dargestellt.

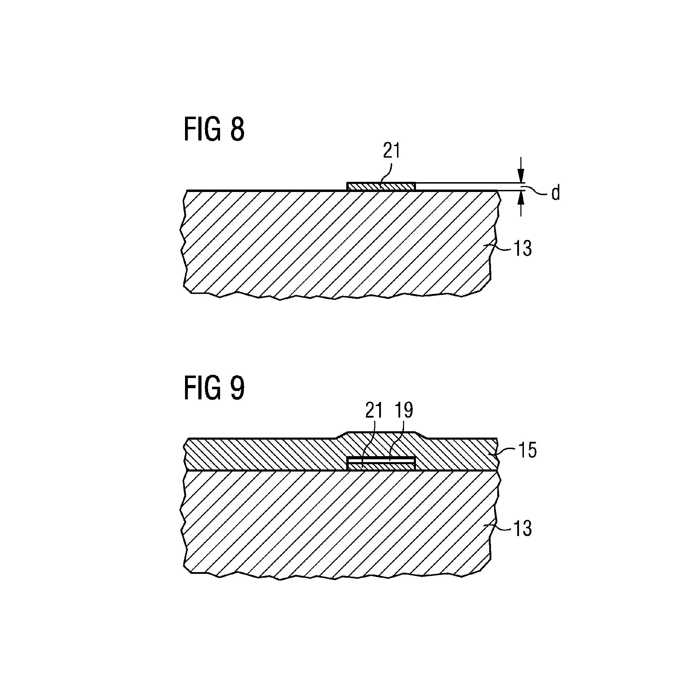

Nach dem Aufbringen der Hilfsschicht 21 wird die Abdeckung 23 entfernt, so dass außerhalb der mit der Hilfsschicht 21 versehenen Oberflächenabschnitte die Oberfläche des Substrats nun ungedeckt ist. Dieser Zustand ist in Figur 8 dargestellt. Auf das in diesem Zustand befindliche Substrat 13 wird dann das Beschichtungssystem 11 aufgebracht. Im vorliegenden Ausführungsbeispiel erfolgt dabei zuerst das Aufbringen der Haftvermittlerschicht 15, wobei die Haftung der Haftvermittlerschicht auf der Hilfsschicht 21 geringer ist, als auf der freien Substratoberfläche. Über der Hilfsschicht 21 bildet sich daher eine Delamination 19 aus, wie in Figur 9 schematisch gezeigt ist. Als Haftvermittlerschicht 15 kommt im vorliegenden Ausführungsbeispiel eine MCrAlY-Schicht zur Anwendung, die entweder mittels eines thermischen Spritzverfahrens oder mittels eines Abscheidens aus der Gasphase aufgebracht werden kann.

Auf das mit der Haftvermittlerschicht 15 versehene Substrat 13 wird anschließend eine Wärmedämmschicht 17 abgeschieden. Als Wärmedämmschicht 17 kommt im vorliegenden Ausführungsbeispiel eine mit Yttriumoxid wenigstens teilstabilisierte Zirkoniumoxidschicht zur Anwendung. Das Aufbringen der keramischen Wärmedämmschicht kann ebenso wie das Aufbringen der Haftvermittlerschicht mittels eines thermischen Spritzverfahrens oder mittels einer Abscheidung aus der Gasphase erfolgen. Sowohl für das Abscheiden der Haftvermittlerschicht als auch für das Abscheiden der Wärmedämmschicht kommt als thermisches Spritzverfahren insbesondere das atmosphärische Plasmaspritzen in Betracht. Nach dem Aufbringen der keramischen Wärmedämmschicht ist der in Figur 5 dargestellte Endzustand des Testbauteils erreicht.

Das mit Hilfe des erfindungsgemäßen Verfahrens hergestellte Testbauteil weist somit wenigstens eine Delamination auf, deren Lage auf dem Testbauteil, im vorliegenden Ausführungsbeispiel also auf der Turbinenschaufel, ebenso vorbekannt ist, wie die Größe und Form der Delamination. Da beim Herstellen des Testbauteils auch der Grad der Haftung des Beschichtungssystems 11 auf der Hilfsschicht 21 beeinflusst werden kann, kann die Delamination auch im Hinblick auf das zu erwartende Signal, dass die Delamination in einem Thermografieverfahren liefert, gezielt erzeugt werden. Ein derartiges Testbauteil kann dann dazu verwendet werden, eine für das Durchführen eines Thermografieverfahrens ausgebildete Thermografieanlage auf ihre ordnungsgemäße Funktion im Hinblick auf die Detektion von Delaminationen zu testen. Zum Testen der Thermografieanlage auf ihre ordnungsgemäße Funktion wird das Testbauteil in die Thermografieanlage eingebracht und die vorhandenen Delaminationen des Beschichtungssystems mittels des in der Thermografieanlage zur Anwendung kommenden Thermografieverfahrens detektiert. Die mittels des Thermografieverfahrens detektierten Eigenschaften der Delamination, also ihre Lage, Größe, Form und der Grad der Ablösung können dann mit den vorbekannten Eigenschaften der im Testbauteil vorhandenen, gezielt eingebrachten Delaminationen verglichen werden. Anhand der Übereinstimmung der gemessenen Eigenschaften mit den vorbekannten Eigenschaften kann dann auf die Qualität der Detektion mittels des Thermografieverfahrens rückgeschlossen werden. Gegebenenfalls können Parameter der Thermografieanlage auf der Basis der Testergebnisse neu justiert werden, um die Detektionsgenauigkeit zu verbessern.

Mit Hilfe der anhand von Ausführungsbeispielen beschrieben Erfindung lassen sich Testbauteile erzeugen, die in vorteilhafter Weise zum Testen von Thermografieanlagen zum Einsatz kommen können. Zudem können zum Herstellen der Testbauteile Bauteile verwendet werden, die früh aus der Produktionskette gefallen sind und somit Ausschussware darstellen, die keine anderweitigen Verwendung mehr zugeführt werden könnte.

## Patentansprüche

1. Verfahren zum Herstellen eines Testbauteils (1, 13), das eine mit einem Beschichtungssystem (11) beschichtete Oberfläche besitzt,
**dadurch gekennzeichnet, dass**
auf der Oberfläche gezielt wenigstens ein Bereich (9) hergestellt wird, der eine definierte Delamination des Beschichtungssystems (11) aufweist.

2. Verfahren nach Anspruch 1,
**dadurch gekennzeichnet, dass**
das Herstellen der definierten Delamination (19) die Schritte umfasst:
- Abdecken (23) eines unbeschichteten Bauteils (13), wobei wenigstens ein definierter Bereich (25) der Oberfläche des Bauteils (19) unbedeckt bleibt;
- Aufbringen einer Hilfsschicht (21) auf den wenigstens einen unbedeckten Bereich (25) der Oberfläche, wobei die Hilfsschicht (21) so gewählt ist, dass das Beschichtungssystem (11) darauf eine im Vergleich zur Oberfläche des Bauteils (13) selbst geringere Haftung oder eine abweichende Wärmeleitfähigkeit besitzt;
- Entfernen der Abdeckung (23);
- Beschichten des Bauteils (13) mit dem Beschichtungssystem (11).

3. Verfahren nach Anspruch 2,
**dadurch gekennzeichnet, dass**
die Hilfsschicht (21) mittels eines thermischen Spritzverfahrens aufgebracht wird.

4. Verfahren nach Anspruch 3,
**dadurch gekennzeichnet, dass**
die Hilfsschicht (21) mittels atmosphärischen Plasmaspritzens aufgebracht wird.

5. Verfahren nach einem der Ansprüche 2 bis 4,
**dadurch gekennzeichnet, dass**
als Hilfsschicht (21) eine Keramikschicht aufgebracht wird.

6. Verfahren nach Anspruch 5,
**dadurch gekennzeichnet, dass**
als Hilfsschicht (21) eine Schicht aus Zirkonoxid, welches mit Yttriumoxid zumindest teilstabilisiert ist, aufgebracht wird.

7. Verfahren nach einem der Ansprüche 2 bis 6,
**dadurch gekennzeichnet, dass**
die Hilfsschicht (21) eine Schichtdicke (d) von wenigstens 10µm aufweist.

8. Verfahren nach einem der Ansprüche 1 bis 7,
**dadurch gekennzeichnet, dass**
das Beschichtungssystem (11) wenigstens eine Haftvermittlerschicht (15) und/oder wenigstens eine thermische Wärmedämmschicht (17) umfasst.

9. Mit einem Beschichtungssystem (11) beschichtetes Testbauteil (1, 13),
**dadurch gekennzeichnet, dass**
in wenigstens einem definierten Bereich (9) des Testbauteils (1, 13) eine gezielt in das Beschichtungssystem (11) eingebrachte Delamination (19) mit definierten Eigenschaften vorhanden ist.

10. Testbauteil nach Anspruch 9,
**dadurch gekennzeichnet, dass**
in dem wenigstens einen Bereich (9) des Testbauteils (13) mit der gezielt eingebrachten Delamination (19) eine Hilfsschicht (21) zwischen der Oberfläche des Bauteils (13) und dem Beschichtungssystem (11) vorhanden ist,
wobei die Hilfsschicht (21) für das Beschichtungssystem (11) eine geringere Haftung oder eine andere Wärmeleitfähigkeit bietet als die Oberfläche des Bauteils (13).

11. Testbauteil nach Anspruch 10,
**dadurch gekennzeichnet, dass**
als Hilfsschicht (21) eine Keramikschicht vorhanden ist.

12. Testbauteil nach Anspruch 11,
**dadurch gekennzeichnet, dass**
als Hilfsschicht (21) eine Schicht aus Zirkoniumoxid, welches mit Yttriumoxid zumindest teilstabilisiert ist, vorhanden ist.

13. Testbauteil nach einem der Ansprüche 10 bis 12,
**dadurch gekennzeichnet, dass**
das die Hilfsschicht (21) eine Schichtdicke (d) von wenigstens 10µm aufweist.

14. Testbauteil nach einem der Ansprüche 9 bis 13,
**dadurch gekennzeichnet, dass**
das das Beschichtungssystem (11) des Testbauteils (13) wenigstens eine Haftvermittlerschicht (15) und/oder wenigstens eine thermische Wärmedämmschicht (17) umfasst.

15. Verfahren zum Testen einer für das Durchführen eines Thermografieverfahrens ausgebildeten Thermografieanlage auf ihre ordnungsgemäße Funktion im Hinblick auf die Detektion von Delaminationen,
**dadurch gekennzeichnet, dass**
zum Testen der Thermografieanlage auf ihre ordnungsgemäße Funktion ein Testbauteil (1, 13) nach einem der Ansprüche 9 bis 14 Verwendung findet, an dem die wenigstens eine definierte Delamination (19) des Beschichtungssystems (11) mittels des in der Thermographieanlage zur Anwendung kommenden Thermografieverfahrens detektiert wird.

## Geänderte Patentansprüche

### Geänderte Patentansprüche gemäss Regel 137(2) EPÜ.

**1.** Verfahren zum Herstellen eines Testbauteils (1, 13), das eine mit einem Beschichtungssystem (11) beschichtete Oberfläche besitzt,
wobei auf der Oberfläche gezielt wenigstens ein Bereich (9) hergestellt wird, der eine definierte Delamination des Beschichtungssystems (11) aufweist,
**dadurch gekennzeichnet, dass**
das Herstellen der definierten Delamination (19) die Schritte umfasst:
- Abdecken (23) eines unbeschichteten Bauteils (13), wobei wenigstens ein definierter Bereich (25) der Oberfläche des Bauteils (19) unbedeckt bleibt;
- Aufbringen einer Hilfsschicht (21) auf den wenigstens einen unbedeckten Bereich (25) der Oberfläche, wobei die Hilfsschicht (21) so gewählt ist, dass das Beschichtungssystem (11) darauf eine im Vergleich zur Oberfläche des Bauteils (13) selbst geringere Haftung oder eine abweichende Wärmeleitfähigkeit besitzt;
- Entfernen der Abdeckung (23);
- Beschichten des Bauteils (13) mit dem Beschichtungssystem (11).

**2.** Verfahren nach Anspruch 1,
**dadurch gekennzeichnet, dass**
die Hilfsschicht (21) mittels eines thermischen Spritzverfahrens aufgebracht wird.

**3.** Verfahren nach Anspruch 2,
**dadurch gekennzeichnet, dass**
die Hilfsschicht (21) mittels atmosphärischen Plasmaspritzens aufgebracht wird.

**4.** Verfahren nach einem der Ansprüche 1 bis 3,
**dadurch gekennzeichnet, dass**
als Hilfsschicht (21) eine Keramikschicht aufgebracht wird.

**5.** Verfahren nach Anspruch 4,
**dadurch gekennzeichnet, dass**
als Hilfsschicht (21) eine Schicht aus Zirkonoxid, welches mit Yttriumoxid zumindest teilstabilisiert ist, aufgebracht wird.

**6.** Verfahren nach einem der Ansprüche 1 bis 5,
**dadurch gekennzeichnet, dass**
die Hilfsschicht (21) eine Schichtdicke (d) von wenigstens 10µm aufweist.

**7.** Verfahren nach einem der Ansprüche 1 bis 6,
**dadurch gekennzeichnet, dass**
das Beschichtungssystem (11) wenigstens eine Haftvermittlerschicht (15) und/oder wenigstens eine thermische Wärmedämmschicht (17) umfasst.

**8.** Mit einem Beschichtungssystem (11) beschichtetes Testbauteil (1, 13),
wobei in wenigstens einem definierten Bereich (9) des Testbauteils (1, 13) eine gezielt in das Beschichtungssystem (11) eingebrachte Delamination (19) mit definierten Eigenschaften vorhanden ist,
**dadurch gekennzeichnet, dass**
in dem wenigstens einen Bereich (9) des Testbauteils (13) mit der gezielt eingebrachten Delamination (19) eine Hilfsschicht (21) zwischen der Oberfläche des Bauteils (13) und dem Beschichtungssystem (11) vorhanden ist,
wobei die Hilfsschicht (21) für das Beschichtungssystem (11) eine geringere Haftung oder eine andere Wärmeleitfähigkeit bietet als die Oberfläche des Bauteils (13).

**9.** Testbauteil nach Anspruch 8,
**dadurch gekennzeichnet, dass**
als Hilfsschicht (21) eine Keramikschicht vorhanden ist.

**10.** Testbauteil nach Anspruch 9,
**dadurch gekennzeichnet, dass**
als Hilfsschicht (21) eine Schicht aus Zirkoniumoxid, welches mit Yttriumoxid zumindest teilstabilisiert ist, vorhanden ist.

**11.** Testbauteil nach einem der Ansprüche 8 bis 10,
**dadurch gekennzeichnet, dass**
das die Hilfsschicht (21) eine Schichtdicke (d) von wenigstens 10µm aufweist.

**12.** Testbauteil nach einem der Ansprüche 8 bis 11,
**dadurch gekennzeichnet, dass**
das das Beschichtungssystem (11) des Testbauteils (13) wenigstens eine Haftvermittlerschicht (15) und/oder wenigstens eine thermische Wärmedämmschicht (17) umfasst.

**13.** Verfahren zum Testen einer für das Durchführen eines
Thermografieverfahrens ausgebildeten Thermografieanlage auf ihre ordnungsgemäße Funktion im Hinblick auf die Detektion von Delaminationen,
**dadurch gekennzeichnet, dass**
zum Testen der Thermografieanlage auf ihre ordnungsgemäße Funktion ein Testbauteil (1, 13) nach einem der Ansprüche 9 bis 14 Verwendung findet, an dem die wenigstens eine definierte Delamination (19) des Beschichtungssystems (11) mittels des in der Thermographieanlage zur Anwendung kommenden Thermografieverfahrens detektiert wird.
